# DEMANDE DE BREVET EUROPEEN

(11) **EP 1 976 171 A2**
(43) Date de publication de la demande: **01.10.2008**
(21) Numéro de dépôt: 08102879.7
(22) Date de dépôt: 25.03.2008
(51) Int. Cl.: H04K 3/00

(54) **Système de communication sécurisée entre un lecteur de carte sans contact et une carte**

(30) Priorité: 27.03.2007 FR 0702227
(71) Demandeur: Commissariat à l'Energie Atomique, 75015 Paris (FR)
(72) Inventeur: Savry, Olivier, 38360, SASSENAGE (FR); Thomas, Thierry, 38760 Varces Allieres et Risset (FR)
(74) Mandataire: Guérin, Michel

(57) **Abrégé**

L'invention concerne les systèmes de communication sans contact entre un objet mobile et un lecteur, notamment les systèmes dans lesquels l'objet mobile est une carte à puce ou une étiquette d'identification.

Pour améliorer la sécurité de communication, le lecteur de carte (20) émet, à partir d'une antenne d'émission radiofréquence (46) séparée de l'antenne de communication principale (16), un signal de perturbation présentant les mêmes caractéristiques de fréquence et de type de modulation que le signal de réponse attendu de la carte (20) vers le lecteur ; le couplage électromagnétique entre cette antenne séparée et l'antenne du lecteur est cependant tel que cette dernière ne "voit" pas la perturbation émise mais détecte uniquement la réponse de la carte ; au contraire, l'environnement entre la carte et le lecteur ne voit la réponse de la carte que mélangée au signal de perturbation.

Applications : lecteurs de badges, d'étiquettes d'identification, etc.

## Description

L'invention concerne les systèmes de communication sans contact entre un objet mobile et un lecteur, notamment les systèmes dans lesquels l'objet mobile est une carte à puce ou une étiquette d'identification, la communication étant établie par transmission électromagnétique, sans contact physique entre la carte ou l'étiquette et le lecteur.

Dans ce qui suit, on désignera l'objet mobile par le mot "carte", étant entendu que cette appellation ne désigne pas limitativement une forme particulière d'objet, et qu'elle s'applique en particulier à une étiquette d'identification radiofréquence généralement désignée sous l'appellation "étiquette RFID".

Dans ces systèmes, le lecteur envoie en général une porteuse radiofréquence, modulée périodiquement pour constituer un signal d'interrogation radiofréquence ; une fréquence typique est de 13,56 MHz, modulée en amplitude ou en fréquence et c'est cette fréquence qu'on mentionnera dans les exemples qui suivent ; le lecteur attend ensuite une réponse ; si une carte susceptible de communiquer avec le lecteur est présente dans un champ géographique déterminé à proximité du lecteur, la carte répond et dialogue avec le lecteur. La réponse peut être l'émission d'une simple identification numérique, ou bien elle peut être plus complexe. La carte peut être dépourvue de source d'alimentation autonome, et dans ce cas l'énergie qui lui permet d'émettre sa réponse est fournie de manière inductive par le lecteur ; l'énergie peut même être fournie par le signal d'interrogation lui-même pour des applications de communication à très faibles distances (quelques centimètres à quelques dizaines de centimètres, voire quelques mètres).

Ces systèmes de communication peuvent être utilisés notamment pour des applications d'identification sécurisée et le contenu confidentiel du dialogue entre la carte et le lecteur doit être protégé contre des intrusions possibles par des tiers malintentionnés. Il faut en particulier empêcher un tiers d'accéder aux données émises par la carte, car l'observation, puis la reproduction, de données émises par une carte authentique pourrait servir à leurrer ensuite le système par une fausse carte.

Pour obtenir une telle protection, on utilise notamment des procédés de cryptage de la réponse de la carte : la carte envoie une réponse cryptée au lieu d'envoyer une réponse en clair, et seul le lecteur est en principe apte à décrypter la réponse. Les procédés de cryptage ne sont cependant pas sûrs à 100% ; si l'enjeu est important, des fraudeurs peuvent arriver à déterminer les clés de cryptage en captant et analysant les signaux radiofréquence émis dans le champ de communication entre la carte et le lecteur.

Pour améliorer la sécurité, on a proposé dans la demande de brevet W02006035178 que le lecteur émette un bruit électromagnétique de brouillage dans le champ utile où se situe la carte, ceci en même temps que la carte émet sa réponse ; le bruit électromagnétique empêche alors un tiers de détecter la réponse émise par la carte. Le bruit est émis dans la bande spectrale de fréquences du signal utile émis par la carte, et il possède des caractéristiques particulières, que le lecteur connaît, de sorte que le lecteur peut le soustraire du signal radiofréquence reçu. La soustraction n'est cependant pas facile en raison du fait que l'injection de bruit agit sous forme d'une modulation de la porteuse du signal de communication qui est émis par le lecteur à destination de la carte, cette modulation de bruit se superposant à une modulation utile nécessaire à la communication vers la carte.

La présente invention vise à améliorer le système et propose pour cela d'utiliser une antenne d'émission radiofréquence séparée pour émettre un signal de perturbation présentant les mêmes caractéristiques de fréquence et de type de modulation que le signal de réponse attendu de la carte vers le lecteur ; le couplage électromagnétique entre cette antenne séparée et l'antenne du lecteur est cependant tel que cette dernière ne "voit" pas la perturbation émise mais détecte uniquement la réponse de la carte ; au contraire, l'environnement entre la carte et le lecteur ne voit la réponse de la carte que mélangée au signal de perturbation ; ce signal de perturbation est de même type que la réponse, et un fraudeur qui tente de capter les signaux électromagnétiques à proximité du lecteur et de la carte ne peut pas recueillir la véritable réponse de la carte.

Ainsi, si la réponse attendue de la carte est une modulation d'amplitude ou de fréquence par un signal binaire émise à une cadence de modulation Fm et modulant une fréquence porteuse Fp ou une fréquence sous-porteuse Fsp, le signal de perturbation sera de préférence une série aléatoire de bits (aléatoire pour constituer un brouillage et non une information) émise à une cadence Fm et modulant en amplitude ou fréquence une fréquence porteuse Fp ou une fréquence sous-porteuse Fsp.

Par conséquent, on propose selon l'invention un système de communication sécurisé entre un lecteur de carte sans contact et une carte, dans lequel le lecteur émet un signal de communication électromagnétique radiofréquence à destination d'une carte située en champ proche et la carte émet un signal de réponse, à protéger contre une détection non souhaitée, le lecteur détectant le signal de réponse au moyen d'une première antenne et le lecteur comportant un circuit de génération d'un signal de perturbation pour engendrer un signal de perturbation en même temps que le signal de réponse émis par la carte, caractérisé en ce que le circuit de génération du signal de perturbation est apte à émettre un signal de perturbation de mêmes caractéristiques de fréquence et de type de modulation que le signal de réponse attendu de la carte vers le lecteur, ce circuit comportant une deuxième antenne d'émission radiofréquence, distincte de la première antenne, pour émettre le signal de perturbation, le couplage électromagnétique entre les deux antennes étant tel que la première antenne retransmette au lecteur principalement la réponse de la carte mais pas le signal de perturbation.

Dans une première réalisation, on prévoit que les deux antennes sont disposées relativement l'une par rapport à l'autre de manière à avoir un couplage électromagnétique mutuel minimal, de préférence nul, de sorte que la première antenne ne reçoit pas ou pratiquement pas le signal émis par la deuxième antenne.

Dans une deuxième réalisation, on prévoit une sonde de mesure de courant dans le circuit alimentant la deuxième antenne, et un circuit de compensation du signal reçu par la première antenne, le circuit de compensation étant connecté d'une part à la sonde de mesure de courant et d'autre part à la première antenne pour appliquer à la première antenne un signal compensant l'effet sur la première antenne du signal de perturbation émis par la deuxième antenne.

Les antennes sont de préférence de type inductif (bobines monospire ou multispires). La première antenne joue de préférence à la fois un rôle d'antenne d'émission de signal et un rôle d'antenne de réception pour détecter une modulation de champ électromagnétique induite par la réponse de la carte.

Le lecteur émet de préférence un signal à fréquence porteuse Fp, modulé périodiquement pendant une durée T pour constituer un signal d'interrogation reconnaissable à destination de la carte et non modulé pendant une deuxième durée T' pour recevoir une réponse d'une carte éventuellement présente ; la réponse de la carte est une modulation d'impédance d'une antenne de la carte ; l'antenne de la carte et l'antenne du lecteur sont couplées électromagnétiquement lorsque la carte est en champ proche, de telle sorte que cette modulation réagit sur l'impédance de la première antenne du lecteur, ce qui permet la détection de la réponse ; le signal de perturbation est émis par le lecteur pendant la durée T'.

D'autres caractéristiques et avantages de l'invention apparaîtront à la lecture de la description détaillée qui suit et qui est faite en référence aux dessins annexés dans lesquels :
- la figure 1 représente un schéma de principe de la présente invention, dans une première réalisation ;
- la figure 2 représente une manière d'obtenir un couplage électromagnétique nul entre deux antennes ;
- la figure 3 représente un circuit d'élaboration de signal de perturbation ;
- la figure 4 représente un schéma de l'invention dans lequel les deux antennes sont couplées mais un circuit de compensation est prévu ;
- la figure 5 représente une sonde de courant d'antenne ;
- la figure 6 représente un circuit de compensation utilisable dans le schéma de la figure 4 ;
- la figure 7 représente un autre schéma de circuit d'élaboration de signal de perturbation.

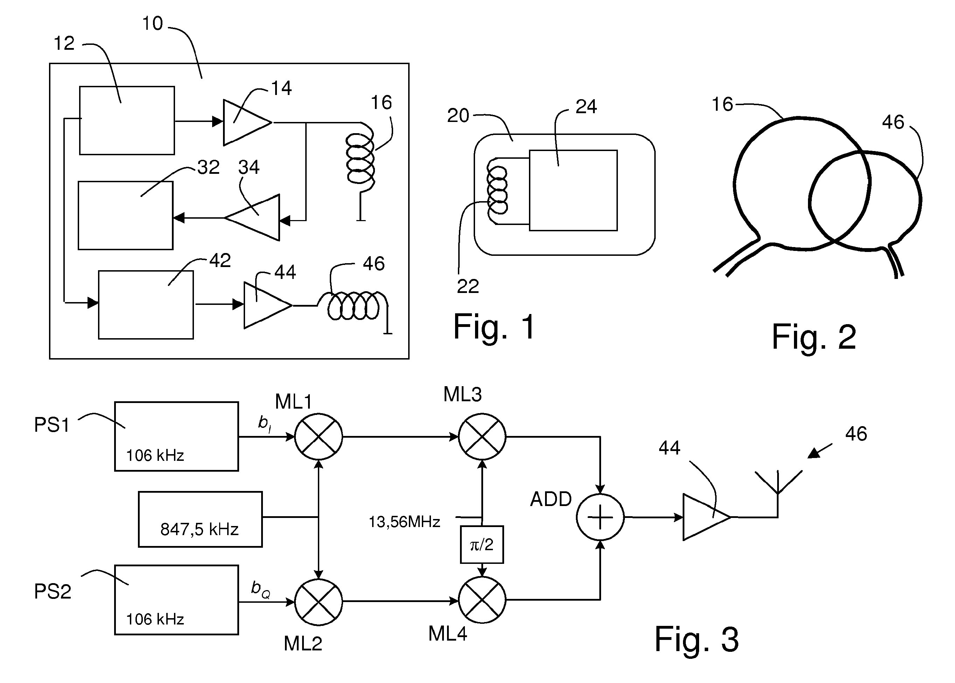

Sur la figure 1, on a représenté à la fois un lecteur de carte sans contact et une carte présente dans le champ (proche) du lecteur. Par champ du lecteur on entend une zone géographique proche du lecteur, dans laquelle d'une part la carte peut détecter un signal d'interrogation en provenance du lecteur, et d'autre par la réponse de la carte est détectable par l'antenne de réception du lecteur. En pratique, la réponse de la carte agit sur l'impédance d'antenne du lecteur suffisamment pour qu'une variation de cette impédance puisse être détectée.

Le lecteur est désigné par la référence 10. Il comprend des circuits électroniques 12 nécessaires à l'émission de signaux d'interrogation, un amplificateur de puissance 14 pour amplifier ces signaux, et une antenne 16 pour émettre des signaux à destination de la carte. L'antenne 16 est de préférence de type inductif, c'est-à-dire qu'elle est constituée par une ou plusieurs spires d'un conducteur électrique et c'est pourquoi elle a été représentée sur la figure 1 sous forme d'une bobine.

L'antenne d'émission 16 joue aussi un rôle d'antenne de réception, de préférence de la manière suivante : son impédance va varier en fonction de la présence de la carte sans contact dans le champ proche du lecteur, et en fonction de la réponse de la carte lorsque celle-ci répond ; cette variation d'impédance a lieu pendant que l'antenne émet un signal radiofréquence non modulé par une information.

La carte 20 est pourvue d'une antenne d'émission 22, de préférence également de type inductif, couplée électromagnétiquement à l'antenne 16 du lecteur lorsque la carte est dans le champ du lecteur. La carte comprend une circuiterie électronique 24 permettant de faire varier l'impédance de l'antenne 22 selon une modulation caractéristique. Ainsi, la réponse de la carte à une sollicitation du lecteur peut être une modulation numérique de l'impédance de charge de son antenne, qui se traduit par une modulation d'impédance de charge de l'antenne du lecteur, et c'est cette modulation qui est détectée par l'antenne 16 du lecteur. Cette modulation permet par exemple d'identifier la carte.

Le lecteur comporte par ailleurs des circuits électroniques 32 de détection de la réponse de la carte. L'antenne 16 est reliée, par un circuit de filtrage et d'amplification 34, à ces circuits électroniques de détection 32.

Typiquement, on peut prévoir que l'émission d'un signal d'interrogation périodique par le lecteur comprend deux phases Φ1 et Φ2, de durées respectives T et T'. Pendant la première phase Φ1 les circuits 12 du lecteur émettent à travers l'amplificateur 14 et l'antenne 16 une fréquence porteuse Fp (de 13,56 MHz par exemple), modulée en amplitude ou en fréquence par un signal binaire caractéristique qu'une carte 20 peut reconnaître. Si une carte est présente, elle capte ce signal par son antenne 22 ; si elle ne comporte pas de source d'alimentation autonome, le signal capté peut d'ailleurs servir de source d'énergie : il est redressé et sert à produire une tension d'alimentation pour les circuits électroniques de la carte.

Pendant la deuxième phase Φ2, le lecteur continue à émettre la fréquence porteuse et la carte envoie sa réponse ; pour cela, les circuits électroniques 24 de la carte peuvent typiquement moduler binairement une fréquence sous-porteuse Fsp (à 847,5 kHz par exemple) et la fréquence porteuse Fsp ; la modulation peut être une modulation de la charge de l'antenne. La modulation permet de transmettre une information binaire qui peut être une identification de la carte, cryptée ou non cryptée.

Le lecteur détecte, à travers son antenne 16, ces variations d'impédance modulées à 847,5 kHz ; l'antenne 16 recueille donc la réponse de la carte, par exemple son identification ; le circuit d'amplification et filtrage 34 isole cette modulation et la transmet aux circuits de détection 32 du lecteur. Le lecteur analyse et transmet les informations correspondantes à un système extérieur, par exemple pour autoriser ou interdire un accès à un lieu en fonction de l'identité détectée.

Selon l'invention, on prévoit que le lecteur comporte en outre un circuit électronique 42 établissant un signal radiofréquence de perturbation dans l'environnement situé entre le lecteur et la carte. Ce signal est amplifié par un amplificateur 44 et appliqué à une antenne supplémentaire ou deuxième antenne 46 du lecteur. Le signal de perturbation est de même type que le signal de réponse de la carte. En particulier, il peut comprendre une porteuse de fréquence Fp (13,56 MHz si le lecteur fonctionne à cette fréquence), modulée par une sous-porteuse à fréquence Fsp (847,5 kHz si la sous-porteuse modulée par la carte est à cette fréquence), et une modulation de cette sous-porteuse par un signal binaire pseudo-aléatoire ressemblant à la modulation de réponse d'une carte. Le signal binaire pseudo-aléatoire qui sert ainsi à perturber l'environnement de la carte est de préférence une suite de bits fournis par un générateur de séquence binaire pseudo-aléatoire fonctionnant à la même cadence que la modulation binaire de réponse de la carte.

On prévoit en outre, dans cet exemple de réalisation de l'invention, que le couplage électromagnétique entre la première antenne 16 et la deuxième antenne 46 du lecteur est le plus faible possible, afin que les variations d'impédance de l'antenne 16, dues à la réponse de la carte, ne soient pas perturbées par le signal de perturbation émis par l'antenne 46.

Ainsi, une personne malintentionnée qui placerait une sonde de mesure électromagnétique dans l'intervalle entre le lecteur et la carte, pour tenter de détecter les variations de champ électromagnétique induites par la réponse de la carte, ne pourra détecter que des variations de champ qui mélangent la réponse de la carte avec le signal de perturbation, lequel ressemble, en bande passante et en type de modulation, à la réponse d'une autre carte. Il ne pourra donc pas utiliser l'information détectée.

Au contraire, l'antenne 16 du lecteur ne sera pas influencée par le signal de perturbation.

Pour obtenir un couplage électromagnétique aussi faible que possible entre les deux antennes, on peut notamment prévoir que les antennes sont constituées de spires conductrices qui sont disposées pratiquement dans un même plan mais qui se chevauchent en partie comme cela est représenté sur la figure 2.

Sur la figure 2 on a supposé, pour simplifier la représentation, que les antennes 16 et 46 sont constituées chacune d'une seule spire conductrice. Le recouvrement partiel des deux antennes est choisi de manière que le couplage entre elles soit minimal et si possible pratiquement nul. On comprend que ce minimum résulte du fait qu'une partie du flux électromagnétique émis par l'une des antennes traverse l'autre antenne, dans un sens à l'endroit de la zone de recouvrement et d'autant plus qu'il y a plus de recouvrement et dans l'autre sens en dehors de la zone de recouvrement et d'autant moins qu'il y a plus de recouvrement, de sorte qu'il y a une configuration possible de recouvrement telle que le flux résultant s'annule. C'est dans cette configuration que le couplage électromagnétique entre les antennes est minimal, ou même nul.

On pourrait aussi prévoir de disposer les spires d'une antenne orthogonalement avec les spires de l'autre. Toutefois, cela aurait l'inconvénient de faciliter le repérage par une sonde extérieure de la composante due à l'antenne 16 et de la composante due à l'antenne 46.

La figure 3 représente un exemple de circuit électronique 42 permettant de synthétiser et émettre un signal de perturbation. Dans cet exemple, on part de deux sources pseudo-aléatoires PS1 et PS2 émettant des séquences binaires pseudo-aléatoires bᵢ et bq à une cadence qui est la cadence d'émission des bits de réponse d'une carte, ici 106 kilobits/seconde (toujours en supposant que les cartes modulent une sous-porteuse à 847,5 Khz avec une porteuse Fp à 13,56 MHz). Les deux sources PS1 et PS2 sont appliquées chacune à une entrée de mélangeurs respectifs ML1 et ML2 qui reçoivent par ailleurs la fréquence sous-porteuse Fsp, en provenance des circuits électronique d'émission 12 du lecteur. Les sorties des mélangeurs sont appliquées chacune à une entrée de deux autres mélangeurs ML3 et ML4 qui reçoivent par ailleurs la fréquence porteuse Fp mais avec un déphasage de π/2 pour cette porteuse entre les entrées des deux mélangeurs ML3 et ML4. Les sorties des mélangeurs ML3 et ML4 sont appliquées aux entrées d'un additionneur ADD dont la sortie est amplifiée par un amplificateur 44 et appliquée à l'antenne 46. Le signal émis est donc un signal à la fréquence porteuse de 13,56 MHz à la fois modulé en amplitude et en phase, ce qui permet de brouiller tout type de modulation de charge, amplitude ou phase ou les deux, dû à la réponse de la carte.

Le signal de perturbation est ainsi tout-à-fait analogue au signal de réponse authentique d'une carte, mais les bits de modulation sont aléatoires. A l'extérieur du lecteur, une sonde de champ électromagnétique ne détecterait qu'un mélange indécodable entre la modulation de la réponse authentique de la carte et la modulation par des bits émis pseudo-aléatoirement. Mais, en raison du couplage nul entre antennes 16 et 46, l'antenne 16 ne reçoit pas de variations de champ dues au signal de perturbation et elle peut transmettre uniquement la réponse authentique de la carte.

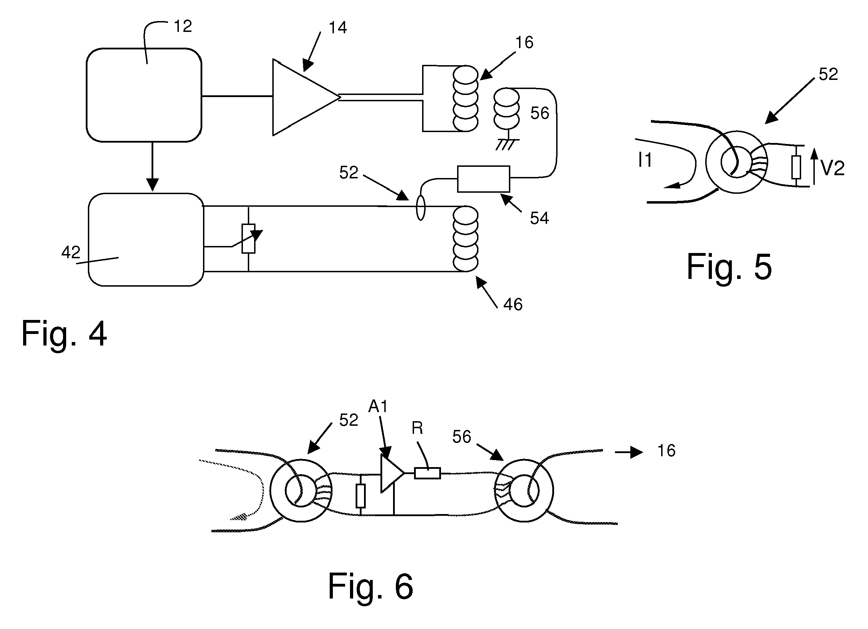

La figure 4 représente un deuxième mode de réalisation de l'invention. Dans ce deuxième mode, le couplage entre l'antenne 16 et l'antenne 46 n'est pas nul, mais un circuit de compensation injecte dans l'antenne 16 un courant qui est proportionnel au signal de perturbation mais déphasé par rapport à ce dernier, de sorte que le courant injecté compense l'effet du couplage électromagnétique de l'antenne 46 vers l'antenne 16. De cette manière, l'effet du signal de perturbation émis par l'antenne 46 ne se fera pas sentir sur l'antenne 16, alors que cet effet se ferait sentir sur une sonde de mesure placée dans le champ du lecteur.

Le signal de perturbation peut être de même nature que celui qui a été indiqué précédemment ; sur la figure 4, on a représenté une configuration dans laquelle la perturbation agit sous forme d'une charge variable mise en parallèle avec l'antenne 46, cette charge ayant une valeur variable pseudo-aléatoirement.

Le circuit de compensation comprend en principe une sonde de courant 52 placée sur le conducteur d'alimentation de l'antenne 46, un circuit 54 pour amplifier et déphaser le courant mesuré par la sonde, et un transformateur (représenté à la figure 4 sous forme d'un bobinage 56 couplé au bobinage d'antenne 16) pour injecter dans l'antenne 16 un courant amplifié et déphasé qui vient compenser l'influence sur l'antenne 16 des variations de champ électromagnétique dues au signal de perturbation émis par l'antenne 46. La sonde de courant peut être un simple anneau de ferrite dans lequel passe le conducteur qui alimente l'antenne 46.

La figure 5 représente la sonde de courant 52 utilisant un anneau de ferrite bobiné dans lequel passe le conducteur d'alimentation de l'antenne 46. L'anneau de ferrite sert à canaliser les lignes de champ magnétique induites par le courant de l'antenne. La sonde introduit dans le circuit de l'antenne une très faible impédance en série. Le courant 11 parcourant l'antenne induit une tension V2 proportionnelle à 11, qui est appliquée au circuit d'amplification et déphasage 54.

La figure 6 représente une constitution possible du circuit de compensation : à partir de la sortie de la sonde de courant 52, la tension V2 est amplifiée par un amplificateur A1 (déphaseur si nécessaire) et convertie en courant dans une résistance de charge R de l'amplificateur, cette résistance étant mise en série par exemple avec un deuxième anneau de ferrite de très faible impédance. Le deuxième anneau de ferrite est traversé par le conducteur qui amène les signaux à l'antenne 16, ou par une spire du bobinage d'antenne. Le deuxième anneau de ferrite sert à constituer le transformateur 56 mentionné plus haut.

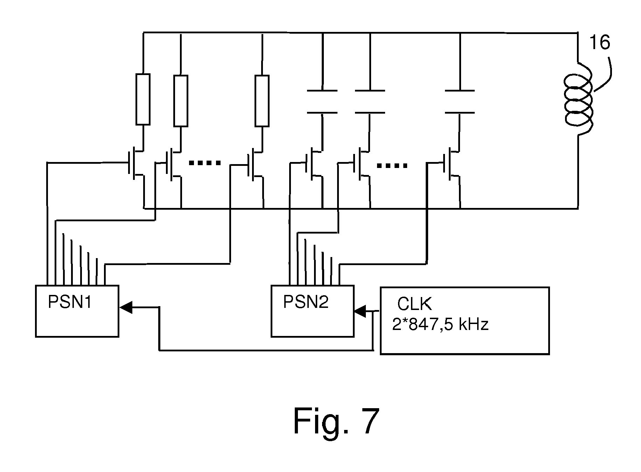

Enfin, on peut prévoir que dans le schéma de la figure 4, le circuit de génération du signal de perturbation 42 est constitué comme cela est représenté à la figure 7 : dans cette réalisation, on utilise un réseau de résistances et un réseau de capacités. Les résistances peuvent être sélectivement mises en parallèle les unes avec les autres, et les capacités également, les capacités sélectionnées étant alors en parallèle avec les résistances sélectionnées. La commande de sélection est effectuée par deux générateurs de séquences pseudo-aléatoires PSN1 et PSN2, l'un agissant sur le réseau de résistances, l'autre sur le réseau de capacités. Un transistor de commutation est placé en série avec chaque résistance ou capacité et les grilles des transistors sont commandées par les deux générateurs qui ont des sorties multiples parallèles. Les générateurs émettent des séquences pseudo-aléatoires qui sont des séquences de nombres successifs obéissant à une règle pseudo-aléatoire.

Les générateurs de séquences pseudo-aléatoires sont de préférence commandés par une horloge CLK à une fréquence double de la fréquence de sous-porteuse Fsp ; cette fréquence double est ici de 1695 kHz.

La mise en parallèle de résistances et de capacités ainsi sélectionnées pseudo-aléatoirement établit une charge variable en parallèle sur l'antenne 46, et c'est le fait que cette charge soit variable qui modifie le champ électromagnétique à proximité du lecteur et qui brouille la réponse de la carte.

La sonde de mesure de courant 52 n'est pas représentée sur la figure 7.

## Revendications

1. Système de communication sécurisé entre un lecteur de carte sans contact (10) et une carte (20), dans lequel le lecteur émet un signal de communication électromagnétique radiofréquence à destination d'une carte située en champ proche et la carte émet un signal de réponse, à protéger contre une détection non souhaitée, le lecteur détectant le signal de réponse au moyen d'une première antenne (16) et le lecteur comportant un circuit (42) de génération d'un signal de perturbation pour engendrer un signal de perturbation en même temps que le signal de réponse émis par la carte, **caractérisé en ce que** le circuit de génération du signal de perturbation est apte à émettre un signal de perturbation de mêmes caractéristiques de fréquence et de type de modulation que le signal de réponse attendu de la carte vers le lecteur, ce circuit comportant une deuxième antenne d'émission radiofréquence (46), distincte de la première antenne, pour émettre le signal de perturbation, le couplage électromagnétique entre les deux antennes étant tel que la première antenne retransmette au lecteur principalement la réponse de la carte mais pas le signal de perturbation.

2. Système selon la revendication 1, **caractérisé en ce que** les deux antennes sont disposées relativement l'une par rapport à l'autre de manière à avoir un couplage électromagnétique mutuel minimal, de préférence nul, de sorte que la première antenne ne reçoit pas ou pratiquement pas le signal émis par la deuxième antenne.

3. Système selon la revendication 2, **caractérisé en ce que** les deux antennes sont constituées par des spires conductrices situées sensiblement dans un même plan et en recouvrement partiel mutuel.

4. Système selon la revendication 1, **caractérisé en ce qu'**il comporte une sonde de mesure de courant (52) dans le circuit alimentant la deuxième antenne (46), et un circuit (54) de compensation du signal reçu par la première antenne, le circuit de compensation étant connecté d'une part à la sonde de mesure de courant et d'autre part à la première antenne pour appliquer à la première antenne un signal compensant l'effet sur la première antenne du signal de perturbation émis par la deuxième antenne.

5. Système selon l'une des revendications précédentes, **caractérisé en ce que** les antennes sont de type inductif.

6. Système selon l'une des revendications précédentes, **caractérisé en ce que** le lecteur émet un signal à fréquence porteuse Fp, modulé périodiquement pendant une durée T pour constituer un signal d'interrogation reconnaissable à destination de la carte et non modulé pendant une deuxième durée T' pour recevoir une réponse d'une carte éventuellement présente, la réponse de la carte est une modulation d'impédance d'une antenne de la carte, l'antenne de la carte et l'antenne du lecteur étant couplées électromagnétiquement lorsque la carte est en champ proche, de telle sorte que cette modulation réagit sur l'impédance de la première antenne du lecteur.

7. Système selon l'une des revendications précédentes, **caractérisé en ce que** le circuit de génération d'un signal de perturbation comporte deux générateurs de séquences binaires pseudo-aléatoires (PS1, PS2), un premier et un second mélangeurs (ML1, ML2) pour mélanger ces séquences avec une fréquence sous-porteuse (Fsp), un troisième mélangeur (ML3) pour mélanger le signal issu du premier mélangeur avec une fréquence porteuse (Fp), et un quatrième mélangeur (ML4) pour mélanger le signal issu du deuxième mélangeur avec la même fréquence porteuse mais déphasée de π/2, les signaux de sortie des troisième et quatrième mélangeurs étant additionnés avant d'être appliqués à la deuxième antenne (46).
